# EUROPEAN PATENT APPLICATION

(11) **EP 4 467 042 A1**
(43) Date of publication of application: **27.11.2024**
(21) Application number: 23197412.2
(22) Date of filing: 14.09.2023
(51) Int. Cl.: A47J 37/07, F23Q 9/00, F24C 15/14, F24C 15/20, F24C 3/10

(54) **HEATING COOKER**

(30) Priority: 26.05.2023 JP 2023086662
(71) Applicant: Shinpo Co., Ltd, Nagoya-shi, Aichi 465-0015 (JP)
(72) Inventor: Nagoya, Yasushi, Nagoya-shi, 465-0015 (JP); Mantani, Yuji, Nagoya-shi, 465-0015 (JP)
(74) Representative: Office Freylinger

(57) **Abstract**

A heating cooker 1000 comprises an inner casing 10 and an outer casing 20. The inner casing 10 comprises a first inner sidewall 12A, a second inner sidewall 12B, a third inner sidewall 13A, and a fourth inner sidewall 13B. The outer casing 20 comprises a first outer sidewall 22A, a second outer sidewall 22B, a third outer sidewall 23A, and a fourth outer sidewall 23B. The size of gap between an inner surface of the first outer sidewall 22A and an outer surface of the first inner sidewall 12A and the size of a gap between an inner surface of the second outer sidewall 22B and an outer surface of the second inner sidewall 12B are smaller than the size of a gap between an inner surface of the third outer sidewall 23A and an outer surface of the third inner sidewall 13A and the size of a gap between an inner surface of the fourth outer sidewall 23B and an outer surface of the fourth inner sidewall 13B.

## Description

### TECHNICAL FIELD

The present invention relates to a heating cooker.

### BACKGROUND ART

Conventionally, heating cookers for heating and cooking food are known. The heating cooker described in Patent Document 1 is provided with an exhaust mechanism for taking in smoke generated when heating food and discharging the smoke outside the heating cooker.

### RELATED ART DOCUMENTS

[Patent Document 1] Japanese Unexamined Patent Application Publication No. 2014-028107

### SUMMARY OF THE INVENTION

### PROBLEMS TO BE SOLVED BY THE INVENTION

In order to reduce the space occupied by the heating cooker, there is a demand for making the heating cooker smaller.

A purpose of the present invention is to provide a smaller heating cooker.

### MEANS FOR SOLVING THE PROBLEMS

The present invention provides an aspect as described below.

A heating cooker including:
an outer casing provided with a rectangular outer bottom wall having an exhaust port, and a first outer sidewall, a second outer sidewall, a third outer sidewall, and a fourth outer sidewall, said outer sidewalls rising from the four sides of the outer bottom wall;
an inner casing provided with an inner bottom wall that is rectangular and has a flat upper surface, and a first inner sidewall, a second inner sidewall, a third inner sidewall, and a fourth inner sidewall, said inner sidewalls rising from the four sides of the inner bottom wall, the inner casing being disposed inside the outer casing;
a heating device; and
a top cover having an intake hole in communication with the exhaust port, the top cover being disposed above the outer casing and the inner casing,
   wherein
the first outer sidewall faces the first inner sidewall,
the second outer sidewall faces the second inner sidewall,
the third outer sidewall faces the third inner sidewall,
the fourth outer sidewall faces the fourth inner sidewall, and
a size of a gap between an inner surface of the first outer sidewall and an outer surface of the first inner sidewall and a size of a gap between an inner surface of the second outer sidewall and an outer surface of the second inner sidewall, are smaller than a size of a gap between an inner surface of the third outer sidewall and an outer surface of the third inner sidewall and a size of a gap between an inner surface of the fourth outer sidewall and an outer surface of the fourth inner sidewall.

### EFFECTS OF THE INVENTION

According to the present invention a smaller heating cooker can be provided.

### BRIEF DESCRIPTION OF THE DRAWINGS

Fig. 1 is a perspective view of a heating cooker and a table;
Fig. 2 is an exploded perspective view of the heating cooker;
Fig. 3 is a perspective view of an inner casing;
Fig. 4A is a cross-sectional view taken along line IVA-IVA in Fig. 3;
Fig. 4B is a cross-sectional view taken along line IVB-IVB in Fig. 3;
Fig. 5 is a perspective view of an outer casing;
Fig. 6A is a cross-sectional view taken along line VIA-VIA in Fig. 5;
Fig. 6B is a cross-sectional view taken along line VIB-VIB in Fig. 5;
Fig. 6C is a cross-sectional view taken along line VIC-VIC in Fig. 5;
Fig. 7 is a cross-sectional view taken along line VII-VII in Fig. 1;
Fig. 8A is a magnified view of portion VIIIA in Fig. 7;
Fig. 8B is a magnified view of portion VIIIB in Fig. 7;
Fig. 9 is a cross-sectional view taken along line IX-IX in Fig. 1;
Fig. 10 is a perspective view of a connection tube, a fire damper, a thermal fuse, and a fall prevention net;
Fig. 11A is a plan view of the fall prevention net;
Fig. 11B is a front view of the fall prevention net; and
Fig. 12 is a perspective view of a cover.

### DETAILED DESCRIPTION OF THE INVENTION

### <1. Summary of the heating cooker>

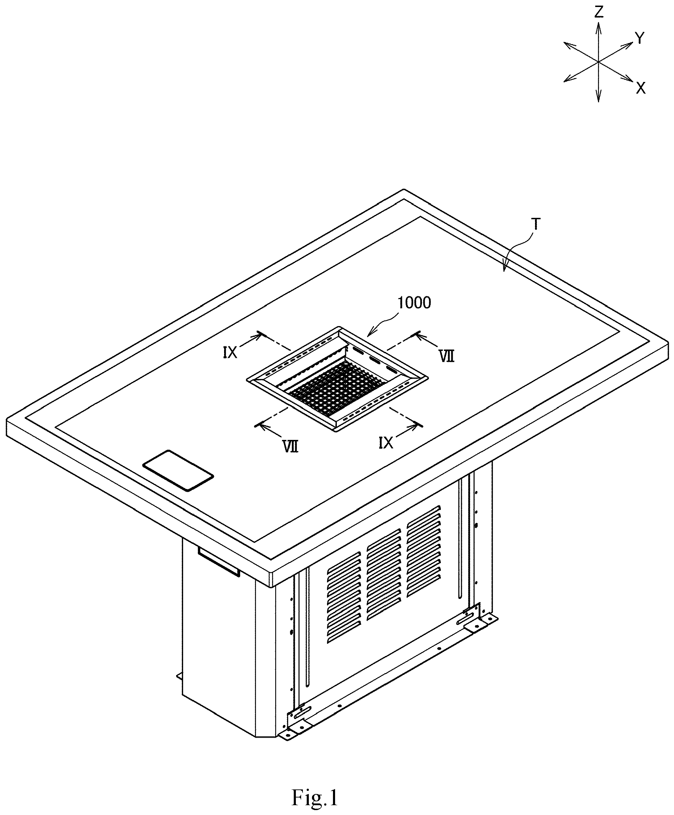

A heating cooker 1000 of the present invention is a device for heating and cooking food. In one aspect, the heating cooker 1000 is a heating cooker for cooking food by grilling, for example, grilled meat or grilled chicken. As illustrated in Fig. 1, the majority of the heating cooker 1000 is contained inside a table T.

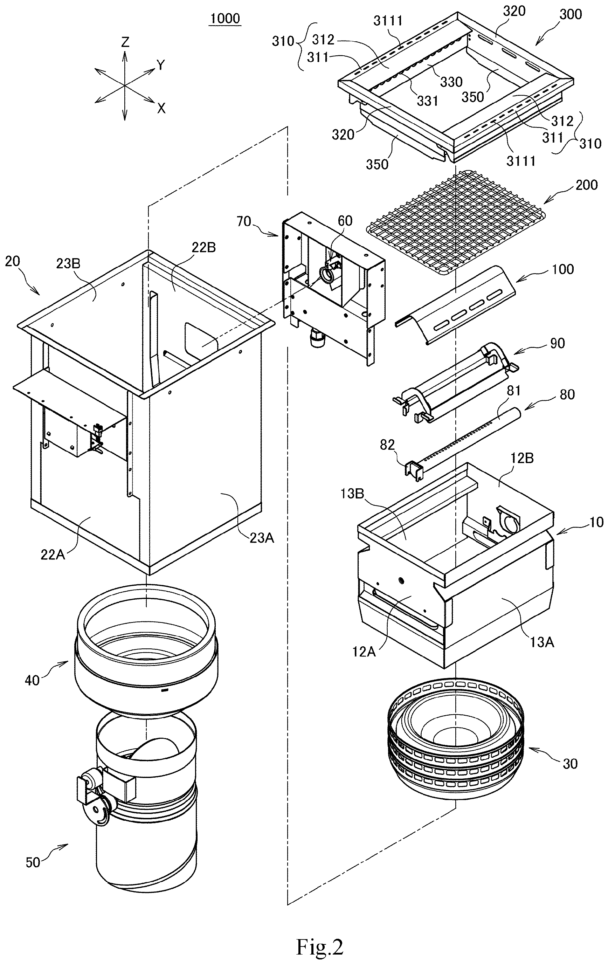

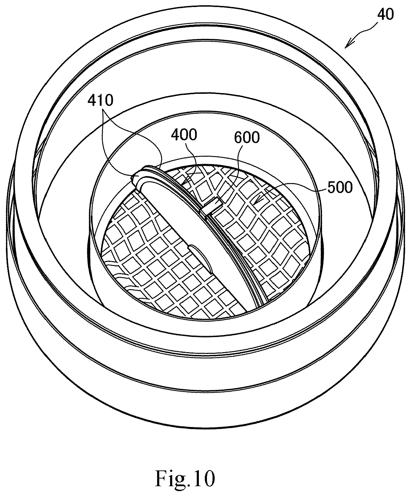

As illustrated in Fig. 2, the heating cooker 1000 mainly includes an inner casing 10, an outer casing 20, a filter 30, a connection tube 40, an exhaust duct 50, a gas unit 60, a side cover 70, a gas burner 80 (an example of a heating device), a hot plate receiver 90, a hot plate 100, a cooking utensil 200, and a top cover 300. As illustrated in Fig. 10, the heating cooker 1000 further includes, inside the connection tube 40, a fire damper 400, a fall prevention net 500, and a thermal fuse 600.

The exhaust duct 50 may be connected to a separate duct (not illustrated) outside the heating cooker 1000. The separate duct may be connected to an exhaust device (not illustrated) such as a fan or the like. When the exhaust device is activated, smoke generated when heating food is sucked from the top cover 300 and drawn below the heating cooker 1000, and is discharged from the heating cooker 1000 through the exhaust duct 50 and the separate duct.

Below, the detailed structure of each component will be described. It should be noted that in the below description, "smoke" may be referred to as "exhaust".

### <1-1. Inner casing and cooking utensil>

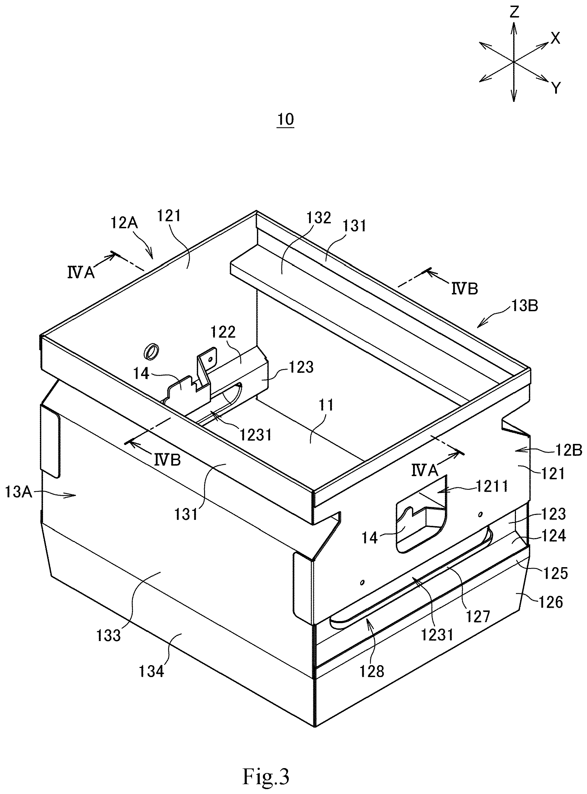

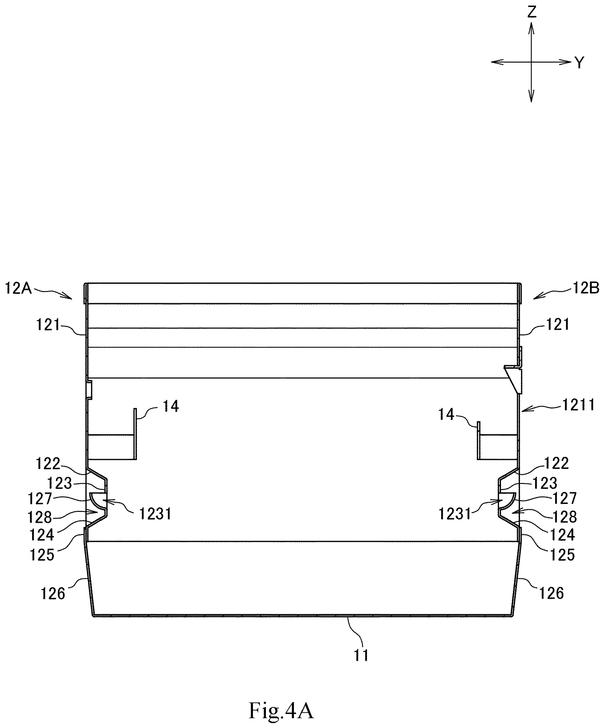

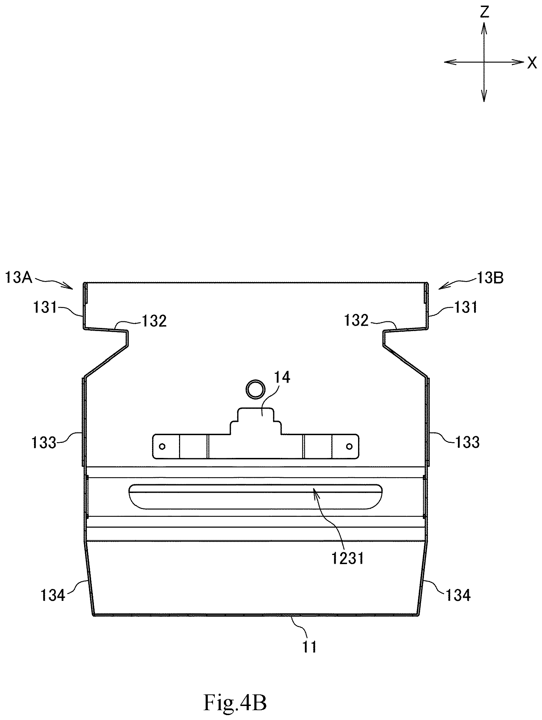

As illustrated in Fig. 3, Fig. 4A, and Fig. 4B, the inner casing 10 includes a rectangular inner bottom wall 11, and four inner sidewalls (a first inner sidewall 12A, a second inner sidewall 12B, a third inner sidewall 13A, and a fourth inner sidewall 13B).

The upper portion of the inner casing 10 is open. During use of the heating cooker 1000, the inner casing 10 contains water, in order to prevent overheating of the inner casing 10, and in order to prevent dirt from adhering to the inner casing 10.

The upper surface of the inner bottom wall 11 is a flat surface. A first side and a second side of the inner bottom wall 11 are the short sides, which are parallel to each other. A third side and a fourth side of the inner bottom wall 11 are the long sides, which are parallel to each other.

Below, for the sake of convenience, as illustrated in Fig. 3, the direction in which the first side and the second side of the inner bottom wall 11 extend is referred to as the "X-direction". The direction in which the third side and the fourth side of the inner bottom wall 11 extend is referred to as the "Y-direction". The direction that is orthogonal to the X-direction and the Y-direction is referred to as the "Z-direction". The Z-direction is parallel to the up-down direction (the vertical direction).

The first inner sidewall 12A rises up from the first side of the inner bottom wall 11. The second inner sidewall 12B rises up from the second side of the inner bottom wall 11, and is opposite to the first inner sidewall 12A. The third inner sidewall 13A rises up from the third side of the inner bottom wall 11. The fourth inner sidewall 13B rises up from the fourth side of the inner bottom wall 11, and is opposite to the third inner sidewall 13A.

As illustrated in Fig. 3 and Fig. 4A, the first inner sidewall 12A and the second inner sidewall 12B each includes a first vertical portion 121, a first inclined portion 122, a second vertical portion 123, a second inclined portion 124, a third vertical portion 125, and a third inclined portion 126. As illustrated in Fig. 4A, the first inner sidewall 12A has a substantially symmetrical shape with the second inner sidewall 12B, relative to an XZ-plane that passes through the center of the inner casing 10 in the Y-direction.

The first vertical portion 121 is parallel to the XZ-plane. The first vertical portion 121 of the second inner sidewall 12B has a through-opening 1211 for allowing the gas burner 80 to pass therethrough. The first inclined portion 122 extends diagonally downward and inward in the Y-direction from the first vertical portion 121. The second vertical portion 123 is provided below the first inclined portion 122. The second vertical portion 123 is parallel to the XZ-plane. The second vertical portion 123 is provided more inward in the Y-direction than the first vertical portion 121. The second inclined portion 124 extends diagonally downward and outward in the Y-direction from the second vertical portion 123. The third vertical portion 125 is provided below the second inclined portion 124. The third vertical portion 125 is parallel to the XZ-plane. The third inclined portion 126 extends diagonally downward and inward in the Y-direction from the third vertical portion 125, and is integrated with a side of the inner bottom wall 11. The angle between the inner bottom wall 11 and the third inclined portion 126 is greater than 90 degrees and smaller than 180 degrees.

The second vertical portion 123 of the first inner sidewall 12A and the second inner sidewall 12B has an elongated inner intake opening 1231 extending in the X-direction. During use of the heating cooker 1000, air (secondary air) required for complete combustion of the flame of the gas burner 80 is taken in through these inner intake openings 1231.

The first inner sidewall 12A and the second inner sidewall 12B include inner splash prevention portions 127. The inner splash prevention portions 127 prevent water inside the inner casing 10 from escaping through the inner intake openings 1231 when the inner casing 10 shakes. The inner splash prevention portions 127 extend diagonally upward and outward in the Y-direction from the lower edges of the inner intake openings 1231. The inner splash prevention portions 127 have a curved plate shape. The tips of the inner splash prevention portions 127 are positioned more inward in the Y-direction than the outer surface of the first vertical portion 121 and the outer surface of the third vertical portion 125.

As described below, the spaces below the inner splash prevention portions 127 (that is, the spaces defined by the second vertical portion 123, the second inclined portion 124, and the inner splash prevention portion 127) function as pockets 128 for temporarily collecting water (liquid).

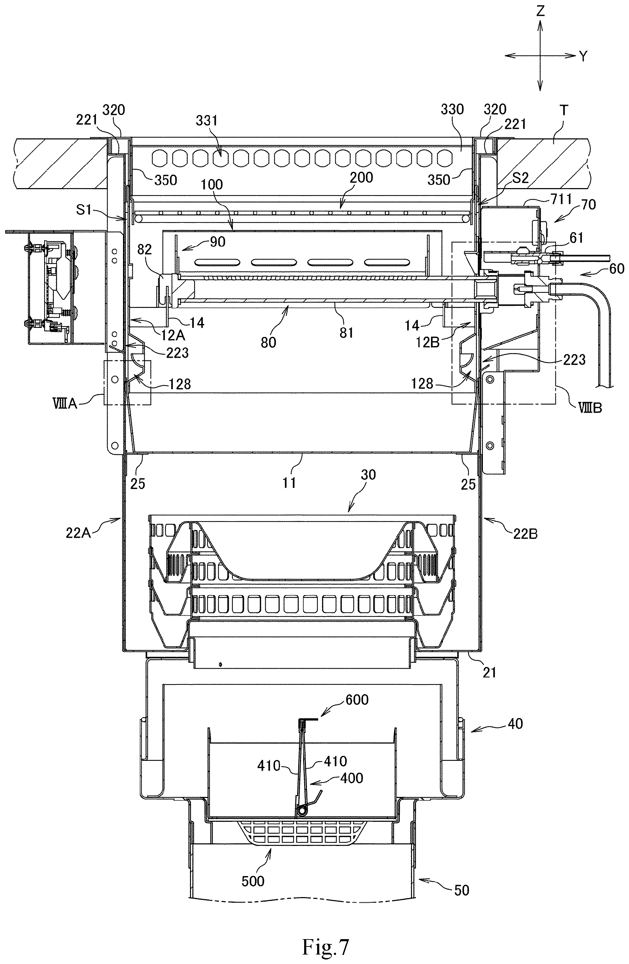

The inner surfaces of the first vertical portion 121 of the first inner sidewall 12A and the second inner sidewall 12B are provided with supports 14. The gas burner 80 and the hot plate receiver 90 are placed on the supports 14 (see Fig. 7).

As illustrated in Fig. 3 and Fig. 4B, the third inner sidewall 13A and the fourth inner sidewall 13B each includes a first vertical portion 131, a placement portion 132, a second vertical portion 133, and an inclined portion 134.

The first vertical portion 131 is parallel to a YZ-plane. The placement portion 132 extends inward in the X-direction from the first vertical portion 131. The cooking utensil 200 (see Fig. 7) is placed on the placement portion 132. The cooking utensil 200 is a member on which food is to be placed, such as, for example, a net or a grate. The second vertical portion 133 is provided below the placement portion 132. The second vertical portion 133 is parallel to the YZ-plane. The inclined portion 134 extends diagonally downward and inward in the X-direction from the second vertical portion 133, and is integrated with a side of the inner bottom wall 11. The upper end of the inclined portion 134 is positioned at the same height as the upper ends of the third inclined portions 126 of the first inner sidewall 12A and the second inner sidewall 12B. The angle between the inner bottom wall 11 and the inclined portion 134 is greater than 90 degrees and smaller than 180 degrees.

### <1-2. Outer casing and filter>

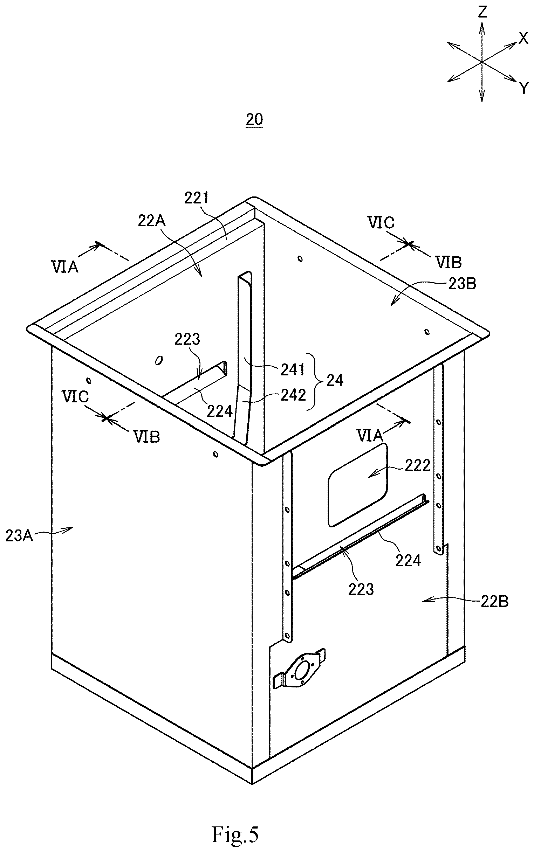

As illustrated in Fig. 5, the outer casing 20 has an external shape that is approximately a rectangular parallelepiped. The outer casing 20 includes a rectangular outer bottom wall 21, and four outer sidewalls (a first outer sidewall 22A, a second outer sidewall 22B, a third outer sidewall 23A, and a fourth outer sidewall 23B). The upper portion of the outer casing 20 is open. The filter 30 and the inner casing 10 are arranged inside the outer casing 20 (see Fig. 7).

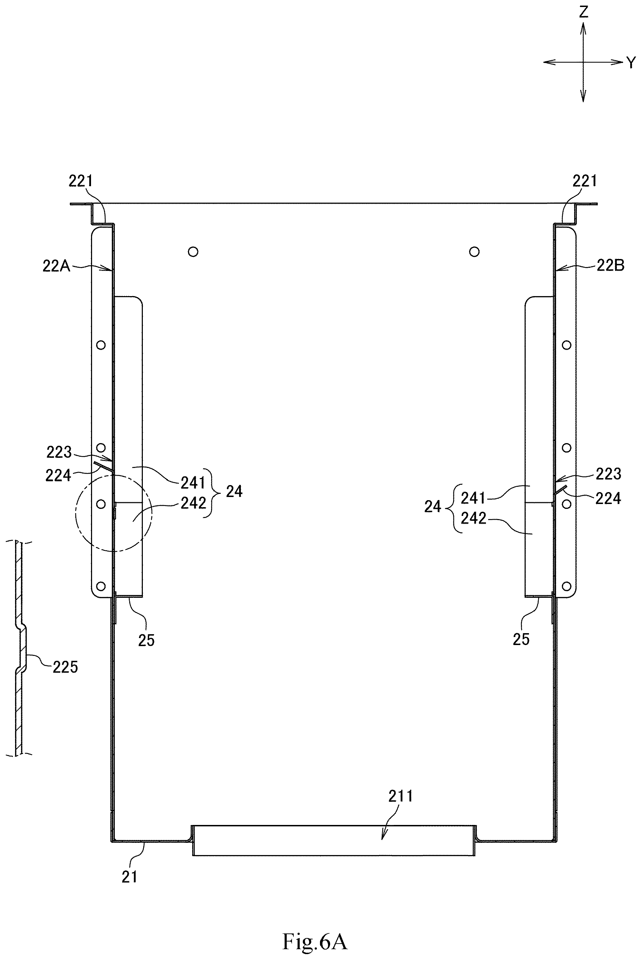

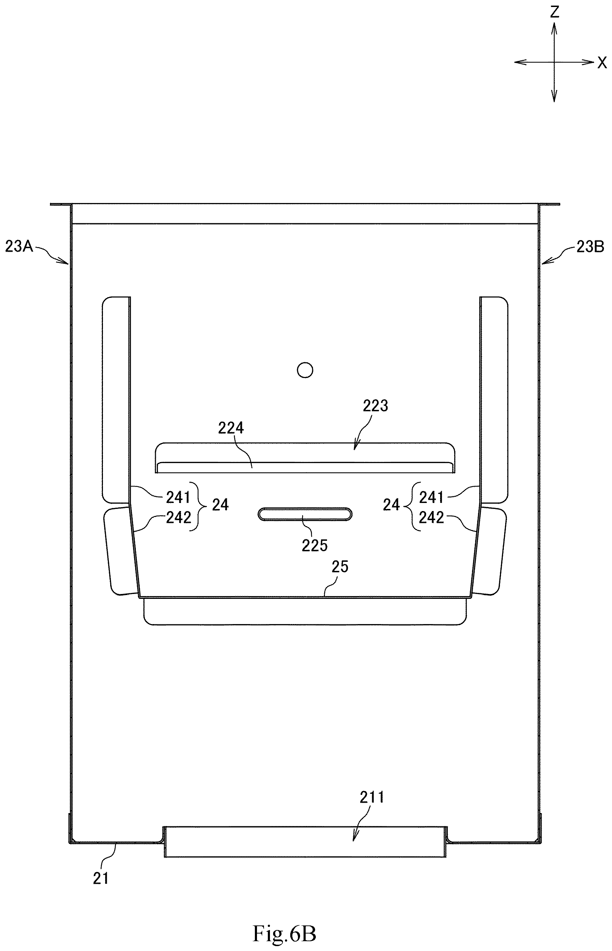

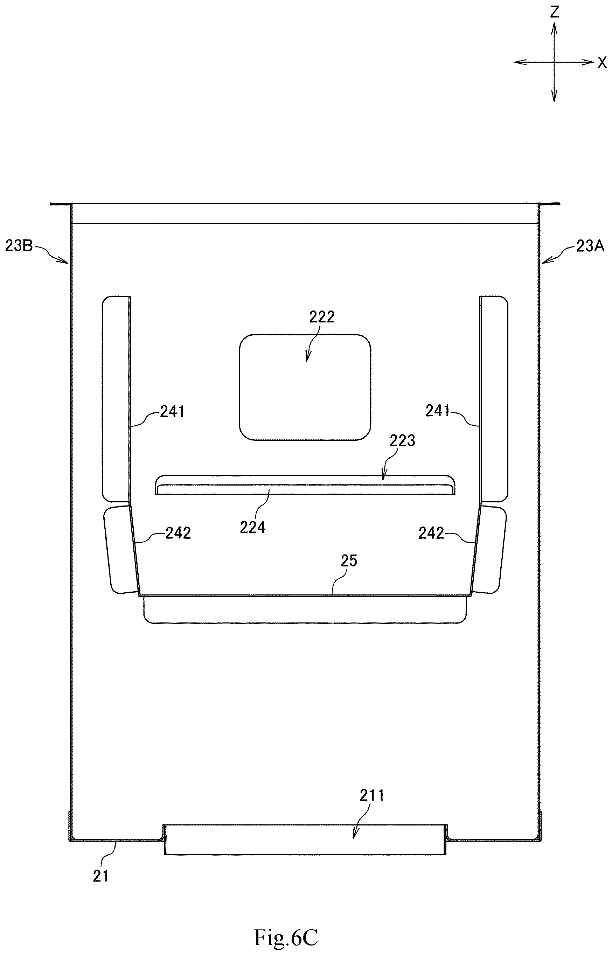

As illustrated in Figs. 6A to 6C, the outer bottom wall 21 has, at a center thereof, an exhaust port 211. A first side and a second side of the outer bottom wall 21 extend in the X-direction. The first side and the second side are the long sides, and are parallel to each other. A third side and a fourth side of the outer bottom wall 21 extend in the Y-direction. The third side and the fourth side are the short sides, and are parallel to each other.

The first outer sidewall 22A rises up from the first side of the outer bottom wall 21. The second outer sidewall 22B rises up from the second side of the outer bottom wall 21, and is opposite to the first outer sidewall 22A. The third outer sidewall 23A rises up from the third side of the outer bottom wall 21. The fourth outer sidewall 23B rises up from the fourth side of the outer bottom wall 21, and is opposite to the third outer sidewall 23A.

The first outer sidewall 22A, the second outer sidewall 22B, the third outer sidewall 23A, and the fourth outer sidewall 23B are orthogonal to the outer bottom wall 21.

As illustrated in Fig. 5 to Fig. 6C, the inner surface of the first outer sidewall 22A and the inner surface of the second outer sidewall 22B are each provided with two guide portions 24 and a support 25.

The guide portions 24 guide the inner casing 10 when the inner casing 10 is inserted into the outer casing 20, such that the inner casing 10 can be inserted smoothly. The guide portions 24 also restrict movement of the inner casing 10 in the X-direction.

Each guide portion 24 includes vertical guides 241 and inclined guides 242.

The two vertical guides 241 provided to the first outer sidewall 22A are spaced apart from each other in the X-direction. In addition, the two vertical guides 241 provided to the first outer sidewall 22A extend in the Z-direction in parallel with each other. The two vertical guides 241 provided to the second outer sidewall 22B are spaced apart from each other in the X-direction. In addition, the two vertical guides 241 provided to the second outer sidewall 22B extend in the Z-direction in parallel with each other.

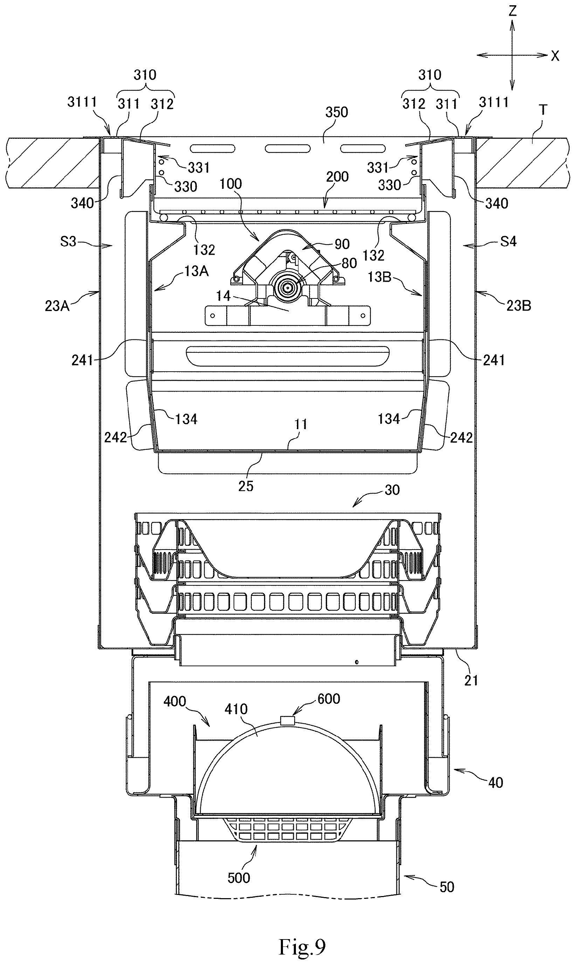

The two inclined guides 242 provided to the first outer sidewall 22A are inclined so as to approach each other from the lower ends of the two vertical guides 241 provided to the first outer sidewall 22A. The two inclined guides 242 provided to the second outer sidewall 22B are inclined so as to approach each other from the lower ends of the two vertical guides 241 provided to the second outer sidewall 22B. The angle of inclination of the inclined guides 242 relative to the Z-direction is approximately identical to the angle of inclination of the inclined portions 134 of the inner casing 10. Accordingly, as illustrated in Fig. 9, when the inner casing 10 is disposed inside the outer casing 20, one of the inclined guides 242 provided to the first outer sidewall 22A and one of the inclined guides 242 provided to the second outer sidewall 22B make contact with the outer surface of the inclined portion 134 of the third inner sidewall 13A. In addition, the other of the inclined guides 242 provided to the first outer sidewall 22A and the other of the inclined guides 242 provided to the second outer sidewall 22B make contact with the outer surface of the inclined portions 134 of the fourth inner sidewall 13B.

The support 25 provided to the first outer sidewall 22A extends in parallel with the X-direction, and is joined to the two inclined guides 242 provided to the first outer sidewall 22A. The support 25 provided to the second outer sidewall 22B extends in parallel with the X-direction, and is joined to the two inclined guides 242 provided to the second outer sidewall 22B. As illustrated in Fig. 7 and Fig. 9, the supports 25 make contact with the lower surface of the inner bottom wall 11 of the inner casing 10, and support the inner casing 10.

As illustrated in Fig. 5 and Fig. 6A, at the upper end of the first outer sidewall 22A and the upper end of the second outer sidewall 22B, there is provided a step 221 for placing the top cover 300.

As illustrated in Fig. 5, the second outer sidewall 22B has a through-opening 222 for allowing the gas burner 80 to pass therethrough. The through-opening 222 is communicated with the through-opening 1211 of the inner casing 10 (see Fig. 3).

The first outer sidewall 22A and the second outer sidewall 22B have outer intake openings 223 extending in the X-direction. During use of the heating cooker 1000, air (secondary air) required for complete combustion of the flame of the gas burner 80 is taken in through these outer intake openings 223. As illustrated in Fig. 7, the outer intake openings 223 are provided above the pockets 128 of the inner casing 10.

As illustrated in Fig. 6A, the first outer sidewall 22A and the second outer sidewall 22B include outer splash prevention portions 224. The outer splash prevention portions 224 extend diagonally upward and outward in the Y-direction from the lower edges of the outer intake openings 223. The outer splash prevention portions 224 consist of inclined plates.

Liquid containing dirt (for example, meat juice generated when grilling meat) and the water inside the inner casing 10 may splash from the inner intake openings 1231 of the inner casing 10 toward the outer intake openings 223. The outer splash prevention portions 224 prevent the liquid containing dirt and the water from splashing to the outside of the outer casing 20 through the outer intake openings 223. In addition, because the outer splash prevention portions 224 are inclined, liquid containing dirt and water that has splashed onto the outer splash prevention portions 224 is returned into the outer casing 20.

As illustrated in Fig. 6A, the first outer sidewall 22A has a protrusion 225. The protrusion 225 protrudes toward the second outer sidewall 22B. The method for making the protrusion 225 is not particularly limited, but the protrusion 225 may be provided by, for example, bead processing a portion of the first outer sidewall 22A to recess a portion of the first outer sidewall 22A.

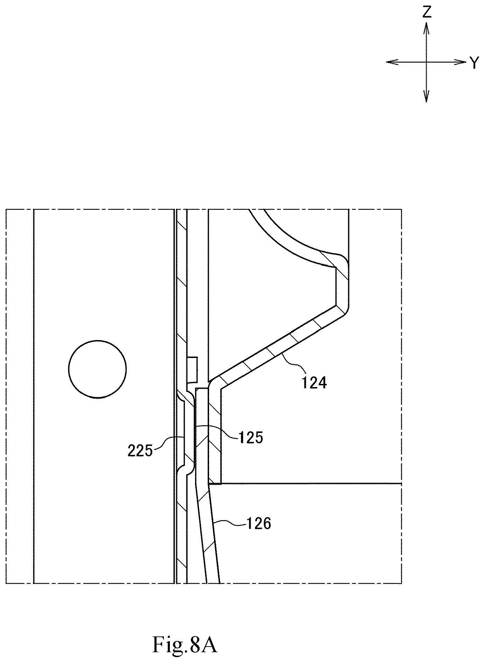

As illustrated in Fig. 8A, the protrusion 225 makes contact with the outer surface of the third vertical portion 125 of the first inner sidewall 12A, and pushes the inner casing 10 toward the second outer sidewall 22B. By having the inner casing 10 be pushed by the protrusion 225, the gap (space S2) between the inner surface of the second outer sidewall 22B and the outer surface of the second inner sidewall 12B becomes smaller.

As illustrated in Fig. 7, when the inner casing 10 is disposed inside the outer casing 20, the first outer sidewall 22A faces the first inner sidewall 12A. A space (gap) S1 between the inner surface of the first outer sidewall 22A and the outer surface of the first inner sidewall 12A is extremely narrow. In addition, the second outer sidewall 22B faces the second inner sidewall 12B. A space S2 between the inner surface of the second outer sidewall 22B and the outer surface of the second inner sidewall 12B is extremely narrow.

As illustrated in Fig. 9, when the inner casing 10 is disposed inside the outer casing 20, the third outer sidewall 23A faces the third inner sidewall 13A. A space (gap) S3 between the inner surface of the third outer sidewall 23A and the outer surface of the third inner sidewall 13A is wider than the spaces S1, S2. In addition, the fourth outer sidewall 23B faces the fourth inner sidewall 13B. A space (gap) S4 between the inner surface of the fourth outer sidewall 23B and the outer surface of the fourth inner sidewall 13B is wider than the spaces S1, S2.

Because the spaces S1, S2 are extremely narrow, almost no smoke flows through the spaces S1, S2. Meanwhile, the spaces S3, S4 function as exhaust paths through which smoke flows.

In one embodiment, in a comparison at the same height in the Z-direction, the size of the space (gap) S2 is smaller than the size of the space (gap) S1. Thus, among the spaces S1, S2, S3, and S4, air (exhaust) is the least likely to be taken in through the space S2.

As illustrated in Fig. 7 and Fig. 9, the filter 30 is disposed on the outer bottom wall 21 so as to cover the exhaust port 211 of the outer bottom wall 21. The filter 30 removes oil contained in the smoke (exhaust). The filter 30 consists of, for example, a plurality of metal rings stacked on top of each other.

### <1-3. Connection tube, exhaust duct, fire damper, and fall prevention net>

As illustrated in Fig. 7 and Fig. 9, the connection tube 40 is joined to the lower surface of the outer bottom wall 21. The lower portion of the filter 30 is inserted into the connection tube 40. The exhaust duct 50 is joined to the lower portion of the connection tube 40. After smoke flowing downward mainly through the spaces S3, S4 has been filtered by the filter 30, the smoke flows into the connection tube 40 and the exhaust duct 50, and is discharged outside the heating cooker 1000.

The fire damper 400 and the fall prevention net 500 are arranged inside the connection tube 40.

### The fire damper 400 is activated when the temperature of the exhaust reaches an abnormal temperature that exceeds a predetermined temperature (for example, 140°C), and seals the flow path inside the connection tube 40. Thus, exhaust that has reached the abnormal temperature is prevented from flowing into the ducts such as the exhaust duct 50. As a result, oil collected in the duct is can be prevented from igniting, thereby preventing fire outbreaks.

As illustrated in Fig. 10, the fire damper 400 includes two plates 410. The two plates 410 are secured in a state of being in contact with each other by a thermal fuse 600. When the two plates 410 are secured by the thermal fuse 600, the flow path inside the connection tube 40 is open. In other words, exhaust that has passed through the filter 30 may flow through the connection tube 40 and into the exhaust duct 50.

When the temperature of the exhaust exceeds the predetermined temperature, the thermal fuse 600 fuses. The fusing of the thermal fuse 600 releases the two plates 410 from the secured state, and the two plates 410 move away from each other to seal the flow path inside the connection tube 40. Thus, exhaust that has reached the abnormal temperature can no longer flow into the exhaust duct 50.

The fall prevention net 500 is disposed below the fire damper 400. The fall prevention net 500 catches objects that fall into the connection tube 40. Objects that may fall include, for example, the thermal fuse 600.

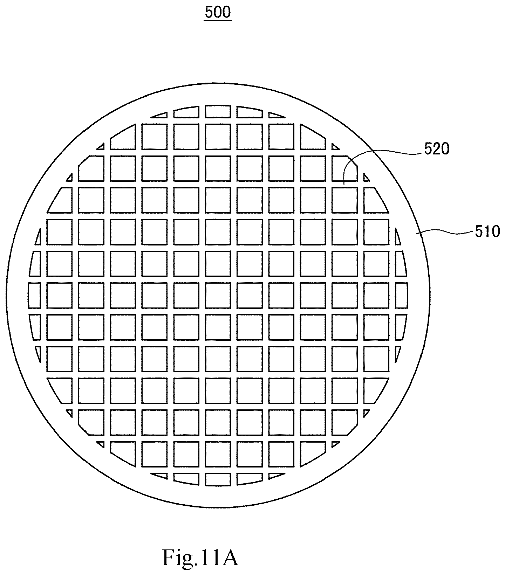

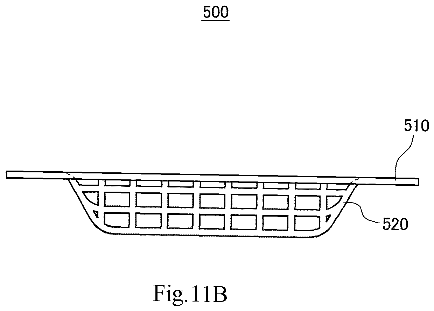

As illustrated in Fig. 11A and Fig. 11B, the fall prevention net 500 includes an annular frame portion 510, and a net body 520 provided in the inside space of the frame portion 510. The frame portion 510 and the net body 520 are both made of, for example, a metallic material.

Preferably, at least the net body 520, and more preferably, the entirety of the fall prevention net 500, is an integrated article that is manufactured by press working of a single metallic plate member. More specifically, the net body 520 or the entirety of the fall prevention net 500 is manufactured by punching a single metallic plate member. When the net body 520 is provided with a recess as described below, the net body 520 is further subjected to bending. When the fall prevention net 500 is disposed inside the connection tube 40, the net body 520 covers the interior of the connection tube 40 (see Fig. 10).

The frame portion 510 consists of a flat plate. The net body 520 is constituted by a plurality of lines intersecting one another. The lines consist of, for example, band-shaped plate members. The end portions of the lines are integrated with the inner circumferential edge of the frame portion 510. In addition, the lines are also integrated with one another. Therefore, there are no irregularities at the points where the lines and the frame portion 510 intersect, or at the points where the lines intersect one another.

The net body 520 preferably has a recess that is recessed downward. When the net body 520 has a recess, fallen objects will be collected in the recess. Thus, when the fire damper 400 is activated, the two plates 410 of the fire damper 400 are able to close completely without interfering with fallen objects. The shape of the recess is not particularly limited, and may be, for example, a reverse truncated cone shape, a rectangular shape, or a square shape as seen in a front view, having a bottom portion with a flat shape, or a shape in which the bottom portion curves downward as seen in a front view.

The depth at the deepest position of the recess is preferably greater than the size of the thermal fuse 600. In addition, the minimum measurement of the horizontal length of the recess is preferably greater than the maximum measurement of the thermal fuse 600. Thus, the thermal fuse 600 will fit inside the recess. In the embodiment illustrated in Fig. 11B, the minimum measurement of the horizontal length of the recess is the horizontal length of the bottom portion of the recess.

The openings in the net body 520 are preferably smaller than the size of the thermal fuse 600. This prevents the thermal fuse 600 from slipping through the openings in the net body 520 and falling down. In an embodiment in which the minimum measurement of the thermal fuse 600 is 14 mm, the net body 520 preferably has not less than three meshes and not more than five meshes, such that the openings become 14 mm or smaller. The net body 520 may have a higher number of meshes than five, but as the number of meshes of the net body 520 becomes higher (in other words, the openings become smaller) there is a risk in that dirt such as oil contained in the exhaust may clog the openings (the openings in the net body 520). Therefore, the net body 520 preferably has not more than five meshes, and most preferably has three meshes. The width of the lines of the net body 520 is, for example, from 0.9 mm to 2.0 mm.

### <1-4. Gas unit and burner>

The gas unit 60 includes a pilot burner 61 for igniting the gas burner 80, an ignition plug for igniting the pilot burner 61, a valve for controlling the flow rate of gas, and a gas supply pipe for supplying gas to the gas burner 80 and the pilot burner 61. The gas supply pipe is connected to a gas supply source. As illustrated in Fig. 7, the gas unit 60 is removably attached to the outer surface of the second outer sidewall 22B.

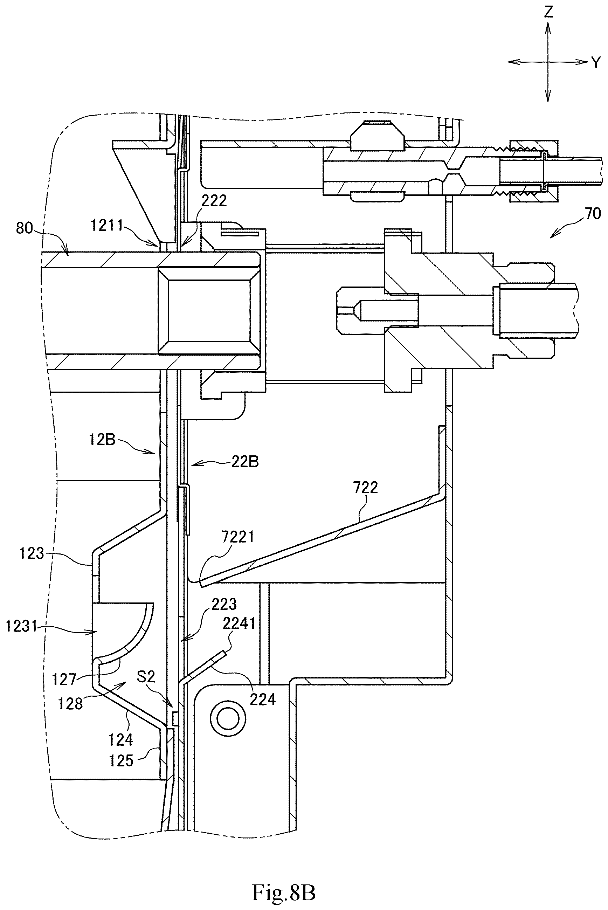

As illustrated in Fig. 7 and Fig. 8B, the side cover 70 is removably attached to the outer surface of the second outer sidewall 22B. The side cover 70 encloses the surroundings of the through-opening 222 (see Fig. 5) of the second outer sidewall 22B, and covers a portion of the gas unit 60. The tip (burner hole) of the pilot burner 61 is disposed inside the side cover 70 (specifically, inside an inner cover 72 described below).

By having the surroundings of the through-opening 222 of the second outer sidewall 22B be enclosed by the side cover 70, liquid such as meat juice escaping through the through-opening 1211 of the inner casing 10 and the through-opening 222 of the outer casing 20 can be prevented from splashing outside the heating cooker 1000.

During operation of the heating cooker 1000 (that is, while the exhaust device is activated), the pressure inside the side cover 70 is preferably approximately the same as the pressure inside the space S2. This inhibits air inside the side cover 70 from flowing into the space S2 through the outer intake openings 223. In other words, the formation of an air flow inside the side cover 70 can be reduced. As a result, the influence of an air flow on the flame of the pilot burner 61 can be reduced.

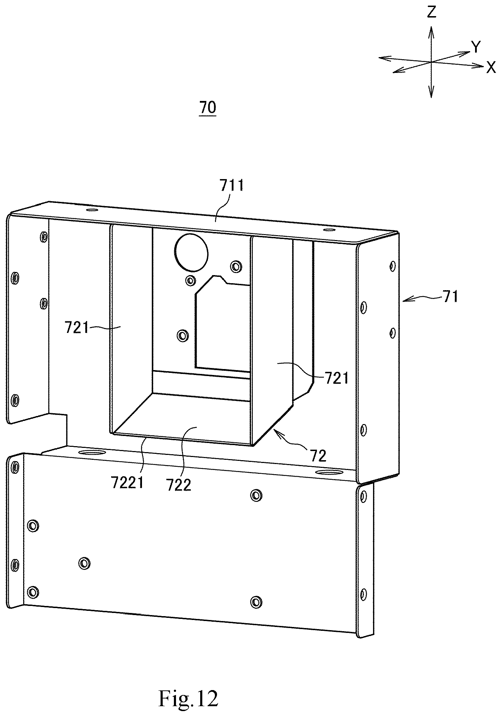

As illustrated in Fig. 12, the side cover 70 includes an outer cover 71, and an inner cover 72.

The outer cover 71 has an opening for allowing the gas unit 60 to pass therethrough. The outer cover 71 includes an upper wall 711. The upper wall 711 is positioned above the through-opening 222 of the second outer sidewall 22B.

The inner cover 72 is attached to the interior of the outer cover 71. The inner cover 72 includes two side plates 721, and one inclined bottom plate 722. The upper ends of the two side plates 721 are in contact with the lower surface of the upper wall 711 of the outer cover 71. The two side plates 721 are positioned on both sides in the X-direction of the through-opening 222 of the second outer sidewall 22B. The inclined bottom plate 722 is integrated with the lower ends of the two side plates 721, and is inclined diagonally downward and inward in the Y-direction.

As illustrated in Fig. 8B, the inclined bottom plate 722 is positioned below the through-opening 222 of the second outer sidewall 22B. A tip 7221 of the inclined bottom plate 722 is positioned above the outer splash prevention portion 224. The tip 7221 of the inclined bottom plate 722 is positioned more inward in the Y-direction than a tip 2241 of the outer splash prevention portion 224. In addition, the tip 7221 of the inclined bottom plate 722 is not in contact with the outer surface of the second outer sidewall 22B. That is to say, there is a gap (for example, a gap of 2 mm) between the tip 7221 of the inclined bottom plate 722 and the outer surface of the second outer sidewall 22B. Therefore, even if liquid containing dirt splashes inside the inner cover 72, the splashed liquid will flow downward along the inclined bottom plate 722, fall onto the outer splash prevention portion 224, and be returned into the outer casing 20 via the outer splash prevention portion 224.

### <1-5. Gas burner>

The gas burner 80 heats the hot plate 100 and the air around the gas burner 80 to generate hot air. The hot air and the radiant heat emitted from the hot plate 100 heat the cooking utensil 200 and the food.

As illustrated in Fig. 2, the gas burner 80 includes a burner body 81, and a mounting part 82. The burner body 81 has a cylindrical shape extending in the Y-direction, and has a first end portion and a second end portion on the opposite side from the first end portion. The mounting part 82 is provided at the second end portion of the burner body 81. The circumferential wall of the burner body 81 is provided with a plurality of burner holes spaced apart from one another in the X-direction. The plurality of burner holes are oriented upward.

As illustrated in Fig. 7, the mounting part 82 is attached to the support 14 of the first inner sidewall 12A. The burner body 81 Is also placed on the support 14 of the second inner sidewall 12B. The burner body 81 is connected to the gas unit 60 through the through-opening 1211 of the second inner sidewall 12B and the through-opening 222 of the second outer sidewall 22B.

Gas that has flowed into the burner body 81 from the gas supply source is mixed with air (primary air). The mixture of gas and air flows inside the burner body 81 toward the second end portion. When the mixture spraying through the burner holes is ignited, flames are emitted from the burner holes.

### <1-6. Hot plate receiver and hot plate>

As illustrated in Fig. 7 and Fig. 9, the hot plate receiver 90 is placed on the supports 14, and is disposed above the gas burner 80. The hot plate 100 has a mountain shape that is curved or bent so as to protrude upward, and has a plurality of openings. The hot plate 100 is placed on the hot plate receiver 90. The hot plate 100 is heated by the flame from the gas burner 80, and thereby emits radiant heat toward the cooking utensil 200.

### <1-7. Top cover>

As illustrated in Fig. 2, Fig. 7, and Fig. 9, the top cover 300 is disposed on the steps 221 of the outer casing 20 and on the table T.

The top cover 300 includes two first upper plates 310, two second upper plates 320, two first side plates 330, two second side plates 340, and two third side plates 350.

The two first upper plates 310 are spaced apart from each other in the X-direction. The two first upper plates 310 each include a horizontal portion 311 extending horizontally, and an extending portion 312 extending diagonally downward and inward in the X-direction from the horizontal portion 311. The horizontal portion 311 has a plurality of through-holes 3111. The through-holes 3111 of one horizontal portion 311 are communicated with the space S3. The through-holes 3111 of the other horizontal portion 311 are communicated with the space S4.

The two second upper plates 320 are spaced apart from each other in the Y-direction. The two second upper plates 320 extend horizontally. The two second upper plates 320 are joined to the two horizontal portions 311. As seen in a plan view, the two horizontal portions 311 and the two second upper plates 320 are formed as rectangles having the long side in the Y-direction.

As illustrated in Fig. 9, each of the two first side plates 330 is parallel to the YZ-plane. One first side plate 330 is positioned more inward in the X-direction than the upper portion of the third inner sidewall 13A. The other first side plate 330 is positioned more inward in the X-direction than the upper portion of the fourth inner sidewall 13B. The two first side plates 330 have a plurality of through-holes 331. The through-holes 331 of one first side plate 330 are communicated with the space S3. The through-holes 331 of the other side plate 330 are communicated with the space S4.

As illustrated in Fig. 9, each of the two second side plates 340 extends to a position below the through-holes 331. The two second side plates 340 are positioned more outward in the X-direction than the first side plates 330, and more inward in the X-direction than the through-holes 3111.

### As illustrated in Fig. 2 and Fig. 7, each of the two third side plates 350 is parallel to the XZ-plane. One third side plate 350 is positioned more inward in the Y-direction than the upper portion of the first inner sidewall 12A. The other third side plate 350 is positioned more inward in the Y-direction than the upper portion of the second inner sidewall 12B.

During operation of the exhaust device, smoke is sucked through the plurality of through-holes 331. The smoke that is sucked through the plurality of through-holes 331 is redirected downward by the second side plates 340. Thereafter, the smoke flows downward in the spaces S3, S4, and is filtered by the filter 30. After being filtered, the smoke passes through the connection tube 40 and the exhaust duct 50, and is discharged outside the heating cooker 1000.

In addition, during operation of the exhaust device, air (outside air) is sucked through the plurality of through-holes 3111. The air that is sucked through the through-holes 3111 cools the horizontal portions 311. Therefore, even if a person who is eating touches the horizontal portions 311, the person will not get burned. In addition, the air that has been sucked in flows downward along the inner surface of the third outer sidewall 23A and the inner surface of the fourth outer sidewall 23B. The flow of air along the inner surface of the third outer sidewall 23A and the inner surface of the fourth outer sidewall 23B can reduce contact of the oil-containing smoke with the inner surface of the third outer sidewall 23A and the inner surface of the fourth outer sidewall 23B. As a result, adhesion of dirt onto the inner surface of the third outer sidewall 23A and the inner surface of the fourth outer sidewall 23B can be reduced.

### <2. Effects>

With the heating cooker 1000 according to the present invention, using the spaces S3, S4 as exhaust paths, there is no need to use the spaces S1, S2 as exhaust paths. Thus, as illustrated in Fig. 7 and Fig. 9, the spaces S1, S2 can be made narrower than the spaces S3, S4, and therefore the heating cooker 1000 can be made smaller.

The upper surface of the inner bottom wall 11 is a flat surface, and therefore the amount of water than can be inserted into the inner casing 10 can be increased.

The gas unit 60 may be attached to and removed from the second outer sidewall 22B. Thus, the gas unit 60 may be removed from the outer casing 20 such that the outer casing 20 can be inserted into the table T. The gas unit 60 thus does not interfere with the table T, and the outer casing 20 can be more easily inserted into the table T.

As illustrated in Fig. 8A, the protrusion 225 of the first outer sidewall 22A makes contact with the first inner sidewall 12A, and pushes the inner casing 10 toward the second outer sidewall 22B. Thus, the gap (the space S2) between the inner surface of the second outer sidewall 22B and the outer surface of the second inner sidewall 12B becomes smaller, making it difficult for air to flow into the space S2. As a result, air can be prevented from flowing from the inside of the side cover 70 through the outer intake opening 223 and into the space S2, thereby reducing the formation of an air flow inside the side cover 70. Accordingly, the flame emitted from the pilot burner 61 disposed inside the side cover 70 is less affected by an air flow, and the flame of the pilot burner 61 is emitted straight, whereby the gas burner 80 can be reliably ignited.

As illustrated in Fig. 9, the two inclined guides 242 make contact with the inclined portion 134 of the third inner sidewall 13A and the inclined portion 134 of the fourth inner sidewall 13B. This makes it difficult for air to flow into the space S2. As a result, air can be prevented from flowing from the inside of the side cover 70 through the outer intake openings 223 and into the space S2, thereby reducing the formation of an air flow inside the side cover 70. Accordingly, the flame emitted from the pilot burner 61 disposed inside the side cover 70 is less affected by an air flow, and the flame of the pilot burner 61 is emitted straight, whereby the gas burner 80 can be reliably ignited.

During operation of the heating cooker 1000 (that is, while the exhaust device is activated), the pressure inside the side cover 70 is approximately the same as the pressure inside the space S2, which inhibits air inside the side cover 70 from flowing into the space S2 through the outer intake openings 223. In other words, the formation of an air flow inside the side cover 70 can be reduced. As a result, the flame emitted from the pilot burner 61 disposed inside the side cover 70 is less affected by an air flow, and the flame of the pilot burner 61 is emitted straight, whereby the gas burner 80 can be reliably ignited.

As illustrated in Fig. 4A, the inner splash prevention portions 127 extend diagonally upward and outward in the Y-direction from the lower edges of the inner intake openings 1231. Accordingly, even if the inner casing 10 is shaken and the water inside the inner casing 10 is about to splash out through the inner intake openings 1231, the water is returned inside the inner casing 10 by the inner splash prevention portions 127. In this way, the inner splash prevention portions 127 can prevent water inside the inner casing 10 from splashing outside the inner casing 10.

As illustrated in Fig. 6A, the first outer sidewall 22A and the second outer sidewall 22B include outer splash prevention portions 224. Accordingly, even if water and liquid containing dirt enters the outer intake openings 223 of the outer casing 20 through the inner intake openings 1231 of the inner casing 10, the outer splash prevention portions 224 can prevent the water and the liquid containing dirt from splashing outside the outer casing 20.

As illustrated in Fig. 8B, the outer splash prevention portions 224 extend diagonally downward and inward in the Y-direction. In addition, the outer intake openings 223 are provided above the pockets 128 of the inner casing 10. Thus, water or liquid containing dirt that has splashed onto the outer splash prevention portions 224 through the outer intake openings 223 flows downward along the outer splash prevention portions 224, falls through the outer intake openings 223 into the pockets 128, and is collected inside the pockets 128. Water and liquid containing dirt collected in the pockets 128 slowly flows into the lower portion of the outer casing 20 through the gap between the third vertical portion 125 of the first inner sidewall 12A and the inner surface of the first outer sidewall 22A, and the gap between the third vertical portion 125 of the second inner sidewall 12B and the inner surface of the second outer sidewall 22B. In this way, water and liquid containing dirt that has splashed onto the outer splash prevention portions 224 can be recovered inside the outer casing 20.

As illustrated in Fig. 8B, during use of the heating cooker 1000, liquid containing dirt such as meat juice may splash inside the inner cover 72 through the through-opening 1211 of the inner casing 10 and the through-opening 222 of the outer casing 20. Liquid that has splashed inside the inner cover 72 falls down onto the inclined bottom plate 722. The inclined bottom plate 722 extends diagonally downward and inward in the Y-direction. In addition, the outer splash prevention portion 224 is disposed below the below the tip 7221 of the inclined bottom plate 722. Accordingly, liquid on the inclined bottom plate 722 flows downward along the inclined bottom plate 722, falls down from the inclined bottom plate 722 onto the outer splash prevention portion 224, and flows into the outer casing 20 along the outer splash prevention portion 224. In this way, liquid that has splashed inside the inner cover 72 can be returned into the outer casing 20.

As illustrated in Fig. 8B, the tip 7221 of the inclined bottom plate 722 is not in contact with the outer surface of the second outer sidewall 22B. Therefore, liquid containing dirt that has reached the tip 7221 of the inclined bottom plate 722 falls down onto the outer splash prevention portion 224 without adhering to the outer surface of the second outer sidewall 22B. Accordingly, the outer surface of the second outer sidewall 22B can be prevented from becoming dirty.

### <3. Modified examples>

The present invention is not limited to the above embodiment, and various modifications are possible without departing from the spirit and the scope of the present invention. Modified examples of the present invention are described below. The modified examples described below may be applied to the above embodiment individually, or in combination, without departing from the spirit and the scope of the present invention.
(3-1) The guide portions 24 of the first outer sidewall 22A do not necessarily include the inclined guides 242. In other words, the guide portions 24 of the first outer sidewall 22A may be constituted solely by the vertical guides 241, and the support 25 may be joined to the two vertical guides 241.
(3-2) The cooking utensil 200 may be a pot for pot cooking.

### <4. Disclosure of the invention>

The present invention provides the following aspects.

### (Aspect 1)

A heating cooker including:
an outer casing provided with a rectangular outer bottom wall having an exhaust port, and a first outer sidewall, a second outer sidewall, a third outer sidewall, and a fourth outer sidewall, said outer sidewalls rising from the four sides of the outer bottom wall;
an inner casing provided with an inner bottom wall that is rectangular and has a flat upper surface, and a first inner sidewall, a second inner sidewall, a third inner sidewall, and a fourth inner sidewall, said inner sidewalls rising from the four sides of the inner bottom wall, the inner casing being disposed inside the outer casing;
a heating device; and
a top cover having an intake hole in communication with the exhaust port, the top cover being disposed above the outer casing and the inner casing,
wherein the first outer sidewall faces the first inner sidewall, the second outer sidewall faces the second inner sidewall, the third outer sidewall faces the third inner sidewall, and the fourth outer sidewall faces the fourth inner sidewall.

### (Aspect 2)

The heating cooker described in Aspect 1, wherein a size of a gap between an inner surface of the first outer sidewall and an outer surface of the first inner sidewall and a size of a gap between an inner surface of the second outer sidewall and an outer surface of the second inner sidewall, are smaller than a size of a gap between an inner surface of the third outer sidewall and an outer surface of the third inner sidewall and a size of a gap between an inner surface of the fourth outer sidewall and an outer surface of the fourth inner sidewall.

### (Aspect 3)

The heating cooker according to Aspects 1 or 2, wherein the third inner sidewall and the fourth inner sidewall are provided with placement portions configured to have a cooking utensil disposed thereupon.

### (Aspect 4)

The heating cooker according to any one of Aspects 1 to 3, wherein the heating device is a gas burner.

### (Aspect 5)

The heating cooker according to any one of Aspects 1 to 4, further comprising a hot plate above the heating device.

### (Aspect 6)

The heating cooker according to any one of Aspects 1 to 5, wherein the second outer sidewall and the second inner sidewall have through-openings for allowing the gas burner to pass therethrough.

### (Aspect 7)

The heating cooker according to any one of Aspects 1 to 6, further comprising a gas unit for supplying gas to the gas burner.

### (Aspect 8)

The heating cooker according to Aspect 7, wherein the gas unit is removably attached to an outer surface of the second outer sidewall.

### (Aspect 9)

The heating cooker according to Aspect 8, further comprising a side cover attached to the outer surface of the second outer sidewall, the side cover covering at least part of the gas unit.

### (Aspect 10)

The heating cooker according to Aspect 9, wherein the gas unit includes a pilot burner for igniting the gas burner, and the pilot burner has a burner hole, the burner hole of the pilot burner being positioned inside the side cover.

### (Aspect 11)

The heating cooker according to Aspect 10, wherein during operation of the heating cooker, a pressure inside the side cover is approximately the same as a pressure in a gap between the inner surface of the second outer sidewall and the outer surface of the second inner sidewall.

### (Aspect 12)

The heating cooker according to any one of Aspects 9 to 11, wherein the side cover is provided with an inclined plate inclined diagonally downward.

### (Aspect 13)

The heating cooker according to any one of Aspects 7 to 9, wherein the gas unit includes a pilot burner for igniting the gas burner.

### (Aspect 14)

The heating cooker according to any one of Aspects 1 to 13, wherein a lower portion of the third inner sidewall and a lower portion of the fourth inner sidewall have inclined portions that are inclined inwardly, and the outer casing is further provided with inclined guides provided to the inner surface of the second outer sidewall for making contact with the inclined portions.

### (Aspect 15)

The heating cooker according to any one of Aspects 1 to 14, wherein the first outer sidewall has a protrusion protruding toward the second outer sidewall, the protrusion making contact with the outer surface of the first inner sidewall and pushing the inner casing toward the second outer sidewall.

### (Aspect 16)

The heating cooker according to any one of Aspects 1 to 15, wherein the size of the gap between the inner surface of the second outer sidewall and the outer surface of the second inner sidewall is smaller than the size of the gap between the inner surface of the first outer sidewall and the outer surface of the first inner sidewall.

### (Aspect 17)

The heating cooker according to any one of Aspects 1 to 16, wherein each of the first inner sidewall and the second inner sidewall has an inner intake opening for taking in air.

### (Aspect 18)

The heating cooker according to Aspect 17, wherein the inner casing is further provided with inner splash prevention portions extending diagonally upward and outward from lower edges of the inner intake openings.

### (Aspect 19)

The heating cooker according to Aspect 18, wherein each of the first inner sidewall and the second inner sidewall has a pocket below the inner splash prevention portion.

### (Aspect 20)

The heating cooker according to any one of Aspects 1 to 19, wherein each of the first outer sidewall and the second outer sidewall has an outer intake opening for taking in air.

### (Aspect 21)

The heating cooker according to Aspect 20, wherein each of the first outer sidewall and the second outer sidewall has an outer intake opening for taking in air, the outer intake openings being provided above the pockets.

### (Aspect 22)

The heating cooker according to Aspects 20 or 21, wherein the outer casing is further provided with outer splash prevention portions extending diagonally upward and outward from lower edges of the outer intake openings.

### (Aspect 23)

The heating cooker according to Aspect 12, wherein each of the first outer sidewall and the second outer sidewall has an outer intake opening for taking in air, and the outer casing is further provided with outer splash prevention portions extending diagonally upward and outward from lower edges of the outer intake openings, a tip of the inclined plate being positioned above the outer splash prevention portion provided to the second outer sidewall.

### (Aspect 24)

The heating cooker according to any one of Aspects 1 to 23, further comprising a connection tube that is directly or indirectly joined to the outer bottom wall, and a fall prevention net disposed inside the connection tube.

### DESCRIPTION OF THE REFERENCE NUMERAL

| | | | |
|---|---|---|---|
| 1000 | Heating cooker | 224 | Outer splash prevention portion |
| 10 | Inner casing | 225 | Protrusion |
| 11 | Inner bottom wall | 242 | Inclined guide |
| 12A | First inner sidewall | 23A | Third outer sidewall |
| 12B | Second inner sidewall | 23B | Fourth outer sidewall |
| 1211 | Through-opening | 60 | Gas unit |
| 1231 | Inner intake opening | 61 | Pilot burner |
| 127 | Inner splash prevention portion | 70 | Side cover |
| 128 | Pocket | 722 | Inclined bottom plate (inclined plate) |
| 13A | Third inner sidewall | 7221 | Tip of inclined bottom plate |
| 13B | Fourth inner sidewall | 80 | Gas burner (heating device) |
| 132 | Placement portion | 100 | Hot plate |
| 134 | Inclined portion | 200 | Cooking utensil |
| 20 | Outer casing | 300 | Top cover |
| 21 | Outer bottom wall | 331 | Through-hole (intake hole) |
| 211 | Exhaust port | S1 | Space (gap) |
| 22A | First outer sidewall | S2 | Space (gap) |
| 22B | Second outer sidewall | S3 | Space (gap) |
| 222 | Through-opening | S4 | Space (gap) |
| 223 | Outer intake opening | | |

## Claims

1. A heating cooker (1000) comprising:
an outer casing (20) provided with a rectangular outer bottom wall (21) having an exhaust port (211), and a first outer sidewall (22A), a second outer sidewall (22B), a third outer sidewall (23A), and a fourth outer sidewall (23B), said outer sidewalls (22A, 22B, 23A, 23B) rising from the four sides of the outer bottom wall (21);
an inner casing (10) provided with an inner bottom wall (11) that is rectangular and has a flat upper surface, and a first inner sidewall (12A), a second inner sidewall (12B), a third inner sidewall (13A), and a fourth inner sidewall (13B), said inner sidewalls (12A, 12B, 13A, 13B) rising from the four sides of the inner bottom wall (11), the inner casing (10) being disposed inside the outer casing (20);
a heating device (80); and
a top cover (300) having an intake hole (331) in communication with the exhaust port (211),
the top cover (300) being disposed above the outer casing (20) and the inner casing (10),
wherein
the first outer sidewall (22A) faces the first inner sidewall (12A),
the second outer sidewall (22B) faces the second inner sidewall (12B),
the third outer sidewall (23A) faces the third inner sidewall (13A),
the fourth outer sidewall (23B) faces the fourth inner sidewall (13B), and
a size of a gap (S1) between an inner surface of the first outer sidewall (22A) and an outer surface of the first inner sidewall (12A) and a size of a gap (S2) between an inner surface of the second outer sidewall (22B) and an outer surface of the second inner sidewall (12B), are smaller than a size of a gap (S3) between an inner surface of the third outer sidewall (23A) and an outer surface of the third inner sidewall (13A) and a size of a gap (S4) between an inner surface of the fourth outer sidewall (23B) and an outer surface of the fourth inner sidewall (13B).

2. The heating cooker (1000) according to claim 1, wherein the third inner sidewall (13A) and the fourth inner sidewall (13B) are provided with placement portions configured to have a cooking utensil (200) disposed thereupon.

3. The heating cooker (1000) according to claim 1, wherein the heating device (80) is a gas burner, the heating cooker (1000) further comprising a hot plate (100) above the heating device (80).

4. The heating cooker (1000) according to claim 3, wherein the second outer sidewall (22B) and the second inner sidewall (12B) have through-openings (222, 1211) for allowing the gas burner (80) to pass therethrough.

5. The heating cooker (1000) according to claim 3 or 4, further comprising a gas unit (60) including a pilot burner (61) for igniting the gas burner (80), wherein the gas unit (60) is removably attached to an outer surface of the second outer sidewall (22B).

6. The heating cooker (1000) according to claim 5, further comprising a side cover (70) attached to the outer surface of the second outer sidewall (22B), wherein the pilot burner (61) has a burner hole, the burner hole of the pilot burner (61) being positioned inside the side cover (70).

7. The heating cooker (1000) according to claim 6, wherein during operation of the heating cooker (1000), a pressure inside the side cover (70) is approximately the same as a pressure in the gap (S2) between the inner surface of the second outer sidewall (22B) and the outer surface of the second inner sidewall (12B).

8. The heating cooker (1000) according to claim 6, wherein a lower portion of the third inner sidewall (13A) and a lower portion of the fourth inner sidewall (13B) have inclined portions (134) that are inclined inwardly, and the outer casing (20) is further provided with inclined guides (242) provided to the inner surface of the second outer sidewall (22B) for making contact with the inclined portions (134).

9. The heating cooker (1000) according to claim 6, wherein the first outer sidewall (22A) has a protrusion (225) protruding toward the second outer sidewall (22B), the protrusion (225) making contact with the outer surface of the first inner sidewall (12A) and pushing the inner casing (10) toward the second outer sidewall (22B).

10. The heating cooker (1000) according to claim 6, wherein the size of the gap (S2) between the inner surface of the second outer sidewall (22B) and the outer surface of the second inner sidewall (12B) is smaller than the size of the gap (S1) between the inner surface of the first outer sidewall (22A) and the outer surface of the first inner sidewall (12A).

11. The heating cooker (1000) according to claim 6, wherein each of the first inner sidewall (12A) and the second inner sidewall (12B) has an inner intake opening (1231) for taking in air, and the inner casing (10) is further provided with inner splash prevention portions (127) extending diagonally upward and outward from lower edges of the inner intake openings (1231).

12. The heating cooker (1000) according to claim 11, wherein each of the first inner sidewall (12A) and the second inner sidewall (12B) has a pocket (128) below the inner splash prevention portion (127).

13. The heating cooker (1000) according to claim 12, wherein each of the first outer sidewall (22A) and the second outer sidewall (22B) has an outer intake opening (223) for taking in air, the outer intake openings (223) being provided above the pockets (128).

14. The heating cooker (1000) according to claim 13, wherein the outer casing (20) is further provided with outer splash prevention portions (224) extending diagonally upward and outward from lower edges of the outer intake openings (223).

15. The heating cooker (1000) according to claim 14, wherein the side cover (70) is provided with an inclined plate (722) inclined diagonally downward, a tip (7221) of the inclined plate (722) being positioned above the outer splash prevention portion (224) provided to the second outer sidewall (22B).
